(19) Europäisches Patentamt
European Patent Office
Office européen des brevets

(11) **EP 4 663 433 A1**

(12) **EUROPEAN PATENT APPLICATION**

(43) Date of publication:
**17.12.2025 Bulletin 2025/51**

(21) Application number: **25175310.9**

(22) Date of filing: **09.05.2025**

(51) International Patent Classification (IPC):
**B60C 23/06** (2006.01)

(52) Cooperative Patent Classification (CPC):
**B60C 23/062; B60C 23/061**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.06.2024 JP 2024093727**

(71) Applicant: **SUMITOMO RUBBER INDUSTRIES, LTD.**
**Kobe-shi, Hyogo 651-0072 (JP)**

(72) Inventor: **KAJIMOTO, Naoki**
**Chuo-ku, Kobe-shi, Hyogo, 651-0072 (JP)**

(74) Representative: **TBK**
**Bavariaring 4-6**
**80336 München (DE)**

(54) **DEFLATION STATE DETECTION SYSTEM, DETERMINATION METHOD, AND PROGRAM**

(57) A vehicle 1 includes: a first acquisition processing unit 71 configured to acquire a related value that is related to an air pressure of each tire; a detection processing unit 72 configured to detect a deflation state of the tire, based on the related value and a predetermined reference value; an update processing unit 73 configured to update the reference value if an operation on an initialization button 31 is accepted; and a first determination processing unit 74 configured to determine whether or not the operation on the initialization button 31 is an incorrect operation, based on a stop status of the vehicle 1 during a period from a time of detection of the deflation state to a time of acceptance of the operation on the initialization button 31.

FIG. 2

**Description**

BACKGROUND OF THE INVENTION

Field of the Invention

The present disclosure relates to a deflation state detection system, a determination method, and a program.

Background Art

A deflation state detection device that can detect a deflation state of pneumatic tires mounted on a vehicle, based on the rotation speeds of the pneumatic tires, has been known. Specifically, in the deflation state detection device, each time a predetermined acquisition timing arrives, a related value that is related to the air pressure of each pneumatic tire, such as the resonance frequency of each pneumatic tire, is acquired based on the rotation speed. In addition, the deflation state is detected based on the acquired related value and a predetermined reference value.

In the deflation state detection device, the reference value is updated after the deflation state is eliminated. Specifically, in the deflation state detection device, if a predetermined update operation such as an operation on an initialization button is accepted, the reference value is updated based on the related value acquired after the update operation is accepted.

Here, the user of the vehicle may perform the update operation after the deflation state is detected but before the deflation state is eliminated. In this regard, a deflation state detection device that determines that the update operation is an incorrect operation if the difference between two such related values acquired before and after the update operation is accepted is included within a predetermined range, has been known as a related technology (see Japanese Laid-Open Patent Publication No. 2013-249024).

Meanwhile, if the deflation state is eliminated by replacing the pneumatic tire, even if the update operation is performed after the deflation state is eliminated, the difference between the two related values acquired before and after the update operation is accepted may be included within the predetermined range. Therefore, in the above-described deflation state detection device according to the related technology, if the deflation state is eliminated by replacing the pneumatic tire, the update operation may be determined to be an incorrect operation even though the update operation is a correct operation.

An object of the present disclosure is to provide a deflation state detection system, a determination method, and a program that can inhibit an update operation from being determined to be an incorrect operation even though the update operation is a correct operation.

SUMMARY OF THE INVENTION

A deflation state detection system according to one aspect of the present disclosure includes a first acquisition processing unit, a detection processing unit, an update processing unit, and a first determination processing unit. The first acquisition processing unit is configured to acquire a related value that is related to an air pressure of each pneumatic tire mounted on a vehicle, based on a rotation speed of the pneumatic tire, each time a predetermined acquisition timing arrives. The detection processing unit is configured to detect a deflation state of the pneumatic tire, based on the related value acquired by the first acquisition processing unit and a predetermined reference value. The update processing unit is configured to, if a predetermined update operation is accepted, update the reference value, based on the related value acquired during a first period including a time of acceptance of the update operation. The first determination processing unit is configured to determine whether or not the update operation is an incorrect operation, based on a stop status of the vehicle during a second period from a time of detection of the deflation state to the time of acceptance of the update operation.

With this deflation state detection system, whether or not the update operation is an incorrect operation is determined based on the stop status of the vehicle during the second period from the time of detection of the deflation state to the time of acceptance of the update operation. Accordingly, it is possible to determine that the update operation is an incorrect operation, only if it can be determined that it is impossible for the user of the vehicle to adjust the air pressure of the pneumatic tire or replace the pneumatic tire during the second period, such as if the vehicle has not stopped during the second period. Therefore, compared to a configuration in which the update operation is determined to be an incorrect operation if the difference between the two related values acquired before and after the update operation is accepted is included within a predetermined range, it is possible to inhibit the update operation from being determined to be an incorrect operation when the deflation state is eliminated by replacing the pneumatic tire.

According to the present disclosure, it is possible to inhibit the update operation from being determined to be an incorrect operation even though the update operation is a correct operation.

BRIEF DESCRIPTION OF THE DRAWINGS

FIG. 1 illustrates the configuration of a deflation state detection system according to an embodiment of the present disclosure;

FIG. 2 illustrates the configuration of a vehicle of the deflation state detection system according to the embodiment of the present disclosure;

FIG. 3 illustrates the configuration of a server of the deflation state detection system according to the embodiment of the present disclosure;

FIG. 4 is a flowchart showing an example of a related value acquisition process executed by the deflation state detection system according to the embodiment of the present disclosure;

FIG. 5 is a flowchart showing an example of a deflation state detection process executed by the deflation state detection system according to the embodiment of the present disclosure;

FIG. 6 is a flowchart showing an example of an update process executed by the deflation state detection system according to the embodiment of the present disclosure;

FIG. 7 is a flowchart showing an example of an operation determination process executed by the deflation state detection system according to the embodiment of the present disclosure; and

FIG. 8 is a flowchart showing an example of a vehicle guidance process executed by the deflation state detection system according to the embodiment of the present disclosure.

DETAILED DESCRIPTION

Hereinafter, an embodiment of the present disclosure will be described with reference to the accompanying drawings. The following embodiment is an example in which the present disclosure is embodied, and does not limit the technical scope of the present disclosure.

[Configuration of Deflation State Detection System 100]

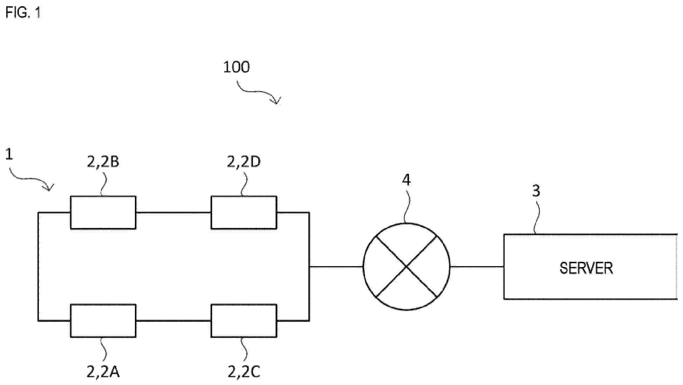

First, the configuration of a deflation state detection system 100 according to the embodiment of the present disclosure will be described with reference to FIG. 1.

The deflation state detection system 100 is capable of determining whether or not a pneumatic tire 2 (see FIG. 1) (hereinafter referred to as "tire 2") mounted on a vehicle 1 (see FIG. 1) has become deflated. In the deflation state detection system 100, if it is determined that the tire 2 has become deflated, a deflation state of the tire 2 is detected.

For example, in the deflation state detection system 100, when the air pressure of any of the tires 2 is reduced by a reference pressure loss amount determined in advance from a predetermined optimum value, it is determined that the tire 2 mounted on the vehicle 1 has become deflated. For example, the reference pressure loss amount is 20 percent of the optimum value.

As shown in FIG. 1, the deflation state detection system 100 includes the vehicle 1 and a server 3. In the deflation state detection system 100, the vehicle 1 and the server 3 are connected to each other via a communication network 4 so as to be able to communicate with each other. For example, the communication network 4 is the Internet.

[Configuration of Vehicle 1]

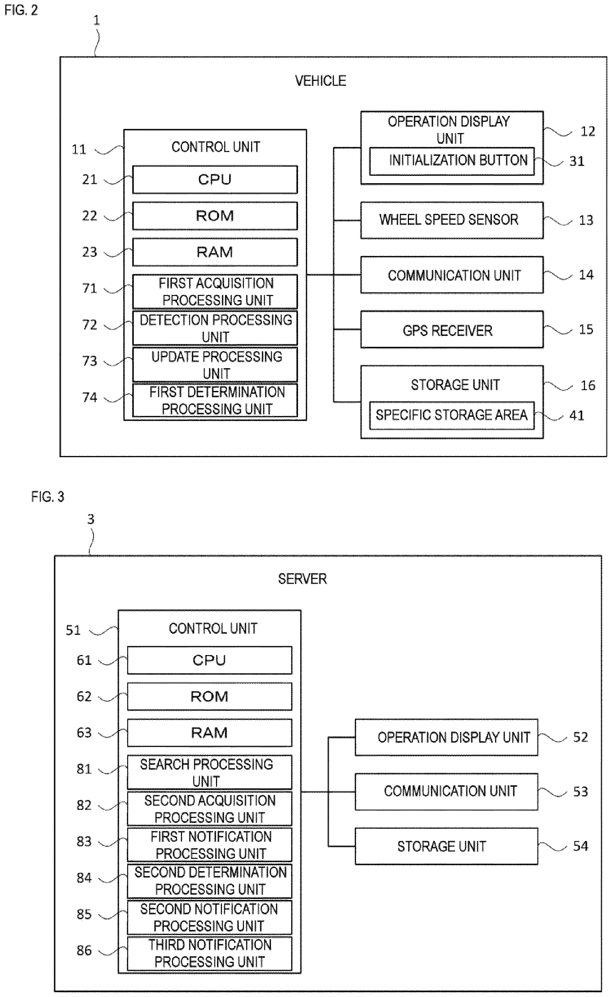

Next, the configuration of the vehicle 1 will be described with reference to FIG. 2.

The vehicle 1 is an automobile such as a passenger car, a bus, or a truck. The vehicle 1 is not limited to the automobile, and may be a motorcycle, a three-wheeled passenger car, or the like.

As shown in FIG. 1, the vehicle 1 includes four tires 2. Specifically, the vehicle 1 includes four wheels (the wheel on the front left side, the wheel on the front right side, the wheel on the rear left side, and the wheel on the rear right side), and the tires 2 are mounted on the respective wheels. Hereinafter, the tire 2 mounted on the wheel on the front left side is referred to as "tire 2A" (see FIG. 1). The tire 2 mounted on the wheel on the front right side is referred to as "tire 2B" (see FIG. 1). The tire 2 mounted on the wheel on the rear left side is referred to as "tire 2C" (see FIG. 1). The tire 2 mounted on the wheel on the rear right side is referred to as "tire 2D" (see FIG. 1).

In addition to various components required for traveling such as an engine, the four wheels, the tires 2 (see FIG. 1) mounted on the respective wheels, brakes, and a steering mechanism, the vehicle 1 includes a control unit 11, an operation display unit 12, a wheel speed sensor 13, a communication unit 14, a GPS receiver 15, and a storage unit 16 shown in FIG. 2.

The control unit 11 realizes various functions for detecting the deflation state of the tires 2. As shown in FIG. 2, the control unit 11 includes a CPU 21, a ROM 22, and a RAM 23. The CPU 21 is a processor that executes various arithmetic processes. The ROM 22 is a nonvolatile storage device in which information such as a control program for causing the CPU 21 to execute various processes is stored in advance. The RAM 23 is a volatile or nonvolatile storage device that is used as a temporary storage memory (work area) for various processes executed by the CPU 21. The control unit 11 does not have to be specialized for the function of detecting the deflation state of the tires 2.

The operation display unit 12 includes a first display section and a first operation section. The first display section is provided at a position at which the first display section is visible to a driver sitting in the driver's seat of the vehicle 1. For example, the first display section is a flat panel display such as a liquid crystal display provided in a center cluster of the vehicle 1. The first display section displays various kinds of information in response to control instructions from the control unit 11. The first operation section is provided at a position at which the first operation section can be operated by the driver sitting in the driver's seat. For example, the first operation section is operation buttons provided in the center cluster or a center console of the vehicle 1, or is a touch panel provided on the display section. The first display section may also include a notification lamp provided in an instrument panel of the vehicle 1 and corresponding to each of various kinds of notification information to the user of the vehicle 1.

The operation display unit 12 includes an initialization button 31 shown in FIG. 2. For example, the initialization button 31 is a physical switch provided in the center cluster or the center console of the vehicle 1. The initialization button 31 is used to update a reference value used for determination as to deflation of the tires 2. As described later, the reference value is updated when the initialization button 31 is operated.

The wheel speed sensor 13 is a sensor capable of detecting the rotation speed of the wheel (rotation speed of the tire 2). The wheel speed sensor 13 is provided for each of the wheels. For example, the wheel speed sensor 13 outputs an electrical signal corresponding to a change in a magnetic field generated by rotation of a sensor rotor having a plurality of teeth provided inside the wheel. The electrical signal outputted from each wheel speed sensor 13 is inputted to the control unit 11. The control unit 11 acquires the rotation speed of each tire 2, based on the electrical signal outputted from each wheel speed sensor 13.

The communication unit 14 is a communication interface capable of executing data communication with external devices. Specifically, the communication unit 14 executes data communication with the server 3 via the communication network 4.

The GPS receiver 15 is capable of receiving radio waves transmitted from GPS satellites. The control unit 11 is capable of acquiring vehicle position information indicating the current position of the vehicle 1, based on information included in radio waves received by the GPS receiver 15.

The storage unit 16 is a nonvolatile storage device. For example, the storage unit 16 is a nonvolatile memory such as a flash memory.

Map data for a predetermined specific region is stored in the storage unit 16.

The map data is used in a process of searching for a traveling route from the current position of the vehicle 1 to a destination set by the driver of the vehicle 1 or the like, and this process is executed by another control unit different from the control unit 11. The specific region may be a region including a plurality of countries, may be a country, or may be a region included in a country.

As shown in FIG. 2, the storage unit 16 includes a specific storage area 41.

The specific storage area 41 is used to store the vehicle position information. Specifically, the control unit 11 acquires the vehicle position information at a predetermined acquisition cycle using the GPS receiver 15. In addition, the control unit 11 adds date and time information indicating the current date and time to the acquired vehicle position information. Then, the control unit 11 stores the vehicle position information having the date and time information added thereto, in the specific storage area 41. Multiple pieces of the vehicle position information that are stored in the specific storage area 41 in consecutive order of acquisition constitute traveling status information indicating the traveling status of the vehicle 1. That is, the traveling status information is stored in the specific storage area 41.

[Configuration of Server 3]

Next, the configuration of the server 3 will be described with reference to FIG. 3.

As shown in FIG. 3, the server 3 includes a control unit 51, an operation display unit 52, a communication unit 53, and a storage unit 54.

The control unit 51 centrally controls the server 3. As shown in FIG. 3, the control unit 51 includes a CPU 61, a ROM 62, and a RAM 63. The CPU 61, the ROM 62, and the RAM 63 are the same as the CPU 21, the ROM 22, and the RAM 23 of the vehicle 1.

The operation display unit 52 is a user interface of the server 3. The operation display unit 52 includes a second display section and a second operation section. The second display section displays various kinds of information in response to control instructions from the control unit 51. For example, the second display section is a flat panel display such as a liquid crystal display. The second operation section inputs various kinds of information to the control unit 51 in response to operations by the user. For example, the second operation section includes a keyboard, a mouse, and a touch panel.

The communication unit 53 is a communication interface capable of executing data communication with external devices. Specifically, the communication unit 53 executes data communication with the vehicle 1 via the communication network 4.

The storage unit 54 is a nonvolatile storage device. For example, the storage unit 54 is a storage device, such as a nonvolatile memory such as a flash memory, a solid state drive (SSD), and a hard disk drive (HDD).

The same map data as that stored in the storage unit 16 of the vehicle 1 is stored in the storage unit 54.

[Functional Configuration of Control Unit 11]

Next, a functional configuration, included in the control unit 11, for detecting the deflation state of the tires 2 will be described with reference to FIG. 2.

As shown in FIG. 2, the control unit 11 includes a first acquisition processing unit 71, a detection processing unit 72, an update processing unit 73, and a first determination processing unit 74. The deflation state detection system of the present disclosure may be composed only of the control unit 11.

Specifically, the CPU 21 of the control unit 11 functions as each of the above-described processing units by executing the control program stored in advance in the ROM 22.

The control program may be recorded in a computer-readable storage medium such as a CD, a DVD, or a flash memory, and read from the storage medium, and stored in the storage unit 16. The control program may be a program for causing a plurality of processors to function as each processing unit shown in FIG. 2. In addition, some or all of the processing units included in the control unit 11 may be composed of an electronic circuit.

The first acquisition processing unit 71 acquires related values that are related to the air pressures of the tires 2 mounted on the vehicle 1, based on the rotation speeds of the tires 2 each time a predetermined acquisition timing arrives.

For example, the first acquisition processing unit 71 acquires four such related values: DEL1, DEL3, the resonance frequency of the tire 2A, and the resonance frequency of the tire 2B.

DEL1 is a value that becomes larger as the rotation speed of the tire 2A and the rotation speed of the tire 2D increase and becomes smaller as the rotation speed of the tire 2B and the rotation speed of the tire 2C increase, or a value that becomes smaller as the rotation speed of the tire 2A and the rotation speed of the tire 2D increase and becomes larger as the rotation speed of the tire 2B and the rotation speed of the tire 2C increase.

For example, DEL1 is calculated according to the following equation (1). "V1" in the equation (1) is the rotation speed of the tire 2A. "V2" in the equation (1) is the rotation speed of the tire 2B. "V3" in the equation (1) is the rotation speed of the tire 2C. "V4" in the equation (1) is the rotation speed of the tire 2D. The rotation speeds of the four tires 2 are acquired based on the electrical signals outputted from the four wheel speed sensors 13 corresponding to the four tires 2.

$$DEL1 = [(V1 + V4)/(V2 + V3) - 1] \times 100\ (\%) \qquad (1)$$

DEL3 is a value that becomes larger as the rotation speed of the tire 2A and the rotation speed of the tire 2C increase and becomes smaller as the rotation speed of the tire 2B and the rotation speed of the tire 2D increase, or a value that becomes smaller as the rotation speed of the tire 2A and the rotation speed of the tire 2C increase and becomes larger as the rotation speed of the tire 2B and the rotation speed of the tire 2D increase.

For example, DEL3 is calculated according to the following equation (2).

$$DEL3 = [(V1 + V3)/(V2 + V4) - 1] \times 100\ (\%) \qquad (2)$$

The resonance frequency of the tire 2A is calculated based on the rotation speed of the tire 2A.

The resonance frequency of the tire 2B is calculated based on the rotation speed of the tire 2B.

A known method may be used as a method for acquiring the resonance frequency of the tire 2. For example, the resonance frequency of the tire 2 is acquired by performing time series analysis, based on a second-order autoregressive (AR) model, on rotational acceleration information calculated from the rotation speed of the tire 2 acquired by the wheel speed sensor 13.

For example, the acquisition timing is a timing that arrives at a predetermined cycle from the start of traveling of the vehicle 1. For example, the cycle is 10 minutes. The acquisition timing may be a timing when the vehicle 1 is traveling at a speed equal to or higher than a predetermined speed, the vehicle 1 is not accelerating or decelerating, and the vehicle 1 is not cornering.

The related values acquired by the first acquisition processing unit 71 do not have to be limited to the above-described four values. For example, the related values acquired by the first acquisition processing unit 71 may include the resonance frequency of the tire 2C and the resonance frequency of the tire 2D. In addition, the related values acquired by the first acquisition processing unit 71 may include DEL2. DEL2 is a value that becomes larger as the rotation speed of the tire 2A and the rotation speed of the tire 2B increase and becomes smaller as the rotation speed of the tire 2C and the rotation speed of the tire 2D increase, or a value that becomes smaller as the rotation speed of the tire 2A and the rotation speed of the tire 2B increase and becomes larger as the rotation speed of the tire 2C and the rotation speed of the tire 2D increase.

The detection processing unit 72 detects the deflation state of the tires 2, based on each related value acquired by the first acquisition processing unit 71 and a predetermined reference value.

For example, the detection processing unit 72 detects the deflation state of the tires 2 when the difference between the related value acquired by the first acquisition processing unit 71 and the reference value exceeds a predetermined threshold value.

Here, in the vehicle 1, the reference value and the threshold value corresponding to each of the related values acquired by the first acquisition processing unit 71 are determined in advance.

For example, the reference value corresponding to DEL1 is a value that is set based on DEL1 acquired by the first acquisition processing unit 71 in a state where the air pressure of each of the four tires 2 is the optimum value. For example, the reference value corresponding to DEL1 is the same value as DEL1 acquired by the first acquisition processing unit 71 in a state where the air pressure of each of the four tires 2 is the optimum value. Alternatively, the reference value corresponding to DEL1 may be the average value of multiple DEL1s acquired by the first acquisition processing unit 71 in a state where the air pressure of each of the four tires 2 is the optimum value.

As with the reference value corresponding to DEL1, the reference value corresponding to DEL3 is a value that is set based on DEL3 acquired by the first acquisition processing unit 71 in a state where the air pressure of each of the four tires 2 is the optimum value.

The reference value corresponding to the resonance frequency of the tire 2A is a value that is set based on the resonance frequency of the tire 2A acquired by the first acquisition processing unit 71 in a state where the air pressure of the tire 2A is the optimum value. For example, the reference value corresponding to the resonance frequency of the tire 2A is the same value as the resonance frequency of the tire 2A acquired by the first acquisition processing unit 71 in a state where the air pressure of the tire 2A is the optimum value. Alternatively, the reference value corresponding to the resonance frequency of the tire 2A may be the average value of multiple resonance frequencies of the tire 2A acquired by the first acquisition processing unit 71 in a state where the air pressure of the tire 2A is the optimum value.

As with the reference value corresponding to the resonance frequency of the tire 2A, the reference value corresponding to the resonance frequency of the tire 2B is a value that is set based on the resonance frequency of the tire 2B acquired by the first acquisition processing unit 71 in a state where the air pressure of the tire 2B is the optimum value.

The threshold value corresponding to DEL1 is a value that indicates the difference between: DEL1 acquired by the first acquisition processing unit 71 in a state where the air pressure of each of any three tires 2 out of the four tires 2 is the optimum value and the air pressure of the remaining one tire 2 is reduced by the reference pressure loss amount from the optimum value; and the reference value corresponding to DEL1.

The threshold value corresponding to DEL3 is a value that indicates the difference between: DEL3 acquired by the first acquisition processing unit 71 in a state where the air pressure of each of any three tires 2 out of the four tires 2 is the optimum value and the air pressure of the remaining one tire 2 is reduced by the reference pressure loss amount from the optimum value; and the reference value corresponding to DEL3.

The threshold value corresponding to the resonance frequency of the tire 2A is a value that indicates the difference between: the resonance frequency of the tire 2A acquired by the first acquisition processing unit 71 in a state where the air pressure of the tire 2A is reduced by the reference pressure loss amount from the optimum value; and the reference value corresponding to the resonance frequency of the tire 2A.

The threshold value corresponding to the resonance frequency of the tire 2B is a value that indicates the difference between: the resonance frequency of the tire 2B acquired by the first acquisition processing unit 71 in a state where the air pressure of the tire 2B is reduced by the reference pressure loss amount from the optimum value; and the reference value corresponding to the resonance frequency of the tire 2B.

For example, for each of the related values acquired by the first acquisition processing unit 71, the detection processing unit 72 determines whether or not the difference between the related value and the reference value exceeds the threshold value. Then, the detection processing unit 72 detects the deflation state of the tires 2 if it is determined for any of the related values that the difference between the related value and the reference value exceeds the threshold value. The detection processing unit 72 may detect the deflation state of the tires 2 if the number of times it is determined for any of the related values that the difference between the related value and the reference value exceeds the threshold value exceeds a predetermined number.

If the deflation state of the tires 2 is detected, the detection processing unit 72 identifies the deflated tire 2.

For example, if the difference between the resonance frequency of the tire 2A and the reference value corresponding to this resonance frequency exceeds the threshold value, the detection processing unit 72 determines that the tire 2A has been deflated.

If the difference between the resonance frequency of the tire 2B and the reference value corresponding to this resonance frequency exceeds the threshold value, the detection processing unit 72 determines that the tire 2B has been deflated.

If the difference between the related value of either DEL1 or DEL3 and the reference value corresponding to this related value exceeds the threshold value, the detection processing unit 72 identifies the deflated tire 2, based on the combination of the sign of DEL1 and the sign of DEL3. Specifically, if the sign of DEL1 is positive and the sign of DEL3 is positive, the detection processing unit 72 determines that the tire 2A has been deflated. If the sign of DEL1 is negative and the sign of DEL3 is negative, the detection processing unit 72 determines that the tire 2B has been deflated. If the sign of DEL1 is negative and the sign of DEL3 is positive, the detection processing unit 72 determines that the tire 2C has been deflated. If the sign of DEL1 is positive and the sign of DEL3 is negative, the detection processing unit 72 determines that the tire 2D has been deflated.

If the deflation state of the tires 2 is detected, the control unit 11 notifies the user of the vehicle 1 of this detection. For example, the control unit 11 displays a message indicating that the deflation state of the tires 2 has been detected and also indicating the deflated tire 2, on the operation display unit 12. The control unit 11 may turn on a notification lamp for notifying that the deflation state of the tires 2 has been detected. The control unit 11 also periodically generates a predetermined warning sound. Accordingly, the user of the vehicle 1 can recognize the deflation state of the tires 2 and take action to eliminate the deflation state of the tires 2 (adjusting the air pressure of the tire 2 or replacing the tire 2).

The notification that the deflation state of the tires 2 has been detected continues until an update operation described later is accepted. For example, the control unit 11 generates the warning sound until the update operation described later is accepted.

In the vehicle 1, each reference value is updated after the air pressure of the tire 2 is adjusted or the tire 2 is replaced.

If the predetermined update operation is accepted, the update processing unit 73 updates the reference values, based on the related values acquired during a first period including the time of acceptance of the update operation.

For example, the update operation is an operation of pressing the initialization button 31 (see FIG. 2).

For example, the first period is a period that starts from the time of acceptance of the update operation. The first period is also a period that ends after the number of times the acquisition timing has arrived from the time of acceptance of the update operation reaches a predetermined number.

If the update operation is accepted, the update processing unit 73 updates the reference value corresponding to each of the related values.

For example, the update processing unit 73 sets any of DEL1s acquired during the first period, as a new reference value corresponding to DEL1. Alternatively, the update processing unit 73 may set the average value of the multiple DEL1s acquired during the first period, as a new reference value corresponding to DEL1.

The update processing unit 73 sets any of DEL3s acquired during the first period, as a new reference value corresponding to DEL3. Alternatively, the update processing unit 73 may set the average value of the multiple DEL3s acquired during the first period, as a new reference value corresponding to DEL3.

The update processing unit 73 sets any of resonance frequencies of the tire 2A acquired during the first period, as a new reference value corresponding to the resonance frequency of the tire 2A. Alternatively, the update processing unit 73 may set the average value of the multiple resonance frequencies of the tire 2A acquired during the first period, as a new reference value corresponding to the resonance frequency of the tire 2A.

The update processing unit 73 sets any of resonance frequencies of the tire 2B acquired during the first period, as a new reference value corresponding to the resonance frequency of the tire 2B. Alternatively, the update processing unit 73 may set the average value of the multiple resonance frequencies of the tire 2B acquired during the first period, as a new reference value corresponding to the resonance frequency of the tire 2B.

The update operation does not have to be limited to the operation on the initialization button 31 (see FIG. 2). For example, the update operation may be an operation on an operation key (soft key) displayed on the first display section in accordance with a predetermined operation on the operation display unit 12. In the case where the control unit 11 is connected in advance to a portable terminal such as a smartphone carried by the user of the vehicle 1 so as to be able to communicate therewith, the update operation may be an operation performed on the portable terminal. The first period may be a period that starts before the update operation is accepted.

Meanwhile, the user of the vehicle 1 may perform the update operation after the deflation state of the tires 2 is detected but before the deflation state of the tires 2 is eliminated. For example, in order to stop the warning sound, the user of the vehicle 1 may perform the update operation before the deflation state of the tires 2 is eliminated. In this regard, a deflation state detection device that determines that the update operation is an incorrect operation if the difference between the two related values acquired before and after the update operation is accepted is included within a predetermined range, has been known as a related technology.

Here, when the deflation state of the tires 2 is eliminated by replacing the tire 2, even if the update operation is performed after the deflation state of the tires 2 is eliminated, the difference between the two related values acquired before and after the update operation is accepted may be included within a predetermined range. Therefore, in the above-described deflation state detection device according to the related technology, when the deflation state of the tires 2 is eliminated by replacing the tire 2, the update operation may be determined to be an incorrect operation even though the update operation is a correct operation.

In contrast, the deflation state detection system 100 according to the embodiment of the present disclosure can inhibit the update operation from being determined to be an incorrect operation even though the update operation is a correct operation as described below.

The first determination processing unit 74 determines whether or not the update operation is an incorrect operation, based on the stop status of the vehicle 1 during a second period from the time of detection of the deflation state of the tires 2 to the time of acceptance of the update operation.

For example, the first determination processing unit 74 determines whether or not the update operation is an incorrect operation, based on the stop status and the stop location of the vehicle 1 during the second period.

The stop status of the vehicle 1 during the second period can be acquired based on the traveling status information stored in the specific storage area 41 of the storage unit 16. The stop location of the vehicle 1 during the second period can be identified based on the traveling status information and the map data stored in the storage unit 16. The first determination processing unit 74 may acquire the stop status of the vehicle 1 during the second period, based on the driving status of the engine of the vehicle 1 during the second period.

Specifically, if the vehicle 1 has not stopped during the second period, the first determination processing unit 74 determines that the update operation is an incorrect operation.

If the vehicle 1 has stopped during the second period and the continuation time of the stopped state of the vehicle 1 does not exceed a predetermined specific time, the first determination processing unit 74 determines that the update operation is an incorrect operation. The specific time is set based on a shorter one of the time required for adjusting the air pressure of the tire 2 and the time required for replacing the tire 2.

If the vehicle 1 has stopped during the second period, the stopped time of the vehicle 1 exceeds the specific time, and the stop location of the vehicle 1 is not at a business place where it is possible to eliminate the deflation state of the tires 2, the first determination processing unit 74 determines that the update operation is an incorrect operation. Examples of the business place include gas stations, service stations, car dealers, car maintenance factories, etc.

If the vehicle 1 has stopped during the second period, the stopped time of the vehicle 1 exceeds the specific time, and the stop location of the vehicle 1 is at the business place, the first determination processing unit 74 determines that the update operation is not an incorrect operation, that is, the update operation is a correct operation.

For example, each time the update operation is accepted, the first determination processing unit 74 determines whether or not the accepted update operation is an incorrect operation. Each time the update operation is accepted, the first determination processing unit 74 may determine whether or not the accepted update operation is an incorrect operation, until the number of times the update operation is accepted reaches a predetermined number after the time of detection of the deflation state of the tires 2.

If the update operation is determined to be an incorrect operation, the control unit 11 notifies the user of the vehicle 1 that the update operation has been determined to be an incorrect operation. For example, the control unit 11 displays a message indicating that the update operation has been determined to be an incorrect operation, on the operation display unit 12. The control unit 11 may turn on a notification lamp for notifying that the update operation has been determined to be an incorrect operation. The control unit 11 also periodically generates the above warning sound. Accordingly, it is possible for the user of the vehicle 1 to recognize that the update operation has been determined to be an incorrect operation.

For example, the control unit 11 notifies that the update operation has been determined to be an incorrect operation, at a timing when notification is performed by a first notification processing unit 83 described below.

The notification that the update operation has been determined to be an incorrect operation ends after a predetermined time has elapsed. The notification that the update operation has been determined to be an incorrect operation may be continued until the update operation is determined to be a correct operation by the first determination processing unit 74.

The first determination processing unit 74 may determine whether or not the update operation is an incorrect operation, based on the stop status of the vehicle 1 during the second period, the related values acquired during the second period, and the related values acquired after the second period has elapsed.

For example, if any of the differences between the related values acquired during the second period and the related values acquired after the second period has elapsed is not included within a predetermined range, the first determination processing unit 74 may determine that the update operation is a correct operation. If the differences between the related values acquired during the second period and the related values acquired after the second period has elapsed are included within the predetermined range, and the vehicle 1 has not stopped during the second period, the first determination processing unit 74 may determine that the update operation is an incorrect operation. If the differences between the related values acquired during the second period and the related values acquired after the second period has elapsed are included within the predetermined range, and the continuation time of the stopped state of the vehicle 1 during the second period does not exceed the specific time, the first determination processing unit 74 may determine that the update operation is an incorrect operation. If the differences between the related values acquired during the second period and the related values acquired after the second period has elapsed are included within the predetermined range, and the stopped time of the vehicle 1 during the second period exceeds the specific time, the first determination processing unit 74 may determine that the update operation is a correct operation. Accordingly, it is possible to improve the accuracy of determining whether or not the update operation is an incorrect operation.

In the deflation state detection system 100, if the update operation is determined to be an incorrect operation, the vehicle 1 is guided to the business place.

[Functional Configuration of Control Unit 51]

Next, a functional configuration, included in the control unit 51 of the server 3, for guiding the vehicle 1 to the business place will be described with reference to FIG. 3.

As shown in FIG. 3, the control unit 51 includes a search processing unit 81, a second acquisition processing unit 82, the first notification processing unit 83, a second determination processing unit 84, a second notification processing unit 85, and a third notification processing unit 86.

Specifically, a vehicle guidance program for causing the control unit 51 to function as each processing unit shown in FIG. 3 is stored in the storage unit 54 of the server 3 in advance. The CPU 61 of the control unit 51 functions as each of the above-described processing units by executing the vehicle guidance program.

Some or all of the processing units included in the control unit 51 may be composed of an electronic circuit. The vehicle guidance program may be a program for causing a plurality of processors to function as each processing unit shown in FIG. 3.

If the update operation is determined to be an incorrect operation by the first determination processing unit 74, the search processing unit 81 searches for the business place where it is possible to eliminate the deflation state of the tires 2.

For example, the search processing unit 81 searches for the business place that exists within a predetermined specific range from the current position of the vehicle 1. For example, the specific range is a range with a radius of 5 kilometers from the vehicle 1.

Then, if the business place is not found, the search processing unit 81 searches for the business place each time a predetermined search timing arrives, until the business place is found. For example, the search timing is a timing that arrives every five minutes. The search timing may be a timing when the vehicle 1 stops such as at a traffic light.

For example, the search processing unit 81 communicates with the vehicle 1, and acquires the vehicle position information last acquired by the vehicle 1, from the vehicle 1. In addition, based on the vehicle position information acquired from the vehicle 1 and the map data stored in the storage unit 54, the search processing unit 81 searches for the business place that exists within the specific range from the position of the vehicle 1 that is based on the acquired vehicle position information.

The second acquisition processing unit 82 acquires a specific route to a specific business place closest to the current position of the vehicle 1 among the business places found by the search processing unit 81.

For example, the second acquisition processing unit 82 acquires the specific route, based on the map data stored in the storage unit 54.

The first notification processing unit 83 notifies a person in the vehicle 1 of the specific route acquired by the second acquisition processing unit 82.

For example, the first notification processing unit 83 displays a guidance screen including the specific route acquired by the second acquisition processing unit 82, on the operation display unit 12 of the vehicle 1. For example, the guidance screen includes a map that includes the specific route, and a message that recommends the user of the vehicle 1 to drive along the specific route to the specific business place and ask the staff of the specific business place to perform work for eliminating the deflation state of the tires 2. Accordingly, it is possible to guide the user of the vehicle 1 to the specific business place.

The server 3 may be connected in advance to the portable terminal carried by the user of the vehicle 1 so as to be able to communicate therewith. In this case, the first notification processing unit 83 may display a guidance screen including the specific route acquired by the second acquisition processing unit 82, on a display unit of the portable terminal carried by the user of the vehicle 1.

Also, the server 3 may acquire in advance an email address of the portable terminal carried by the user of the vehicle 1. In this case, the first notification processing unit 83 may send an email containing the guidance screen to the email address of the portable terminal carried by the user of the vehicle 1.

The second determination processing unit 84 determines whether or not the vehicle 1 is traveling along the specific route, after the specific route is notified by the first notification processing unit 83.

For example, the second determination processing unit 84 communicates with the vehicle 1, and acquires the vehicle position information acquired by the vehicle 1 after the specific route is notified, from the vehicle 1. Then, the second determination processing unit 84 determines whether or not the vehicle 1 is traveling along the specific route, based on the vehicle position information acquired from the vehicle 1. For example, if the vehicle 1 has traveled along the specific route to the intermediate point on the specific route, the second determination processing unit 84 determines that the vehicle 1 is traveling along the specific route. If the vehicle 1 has deviated from the specific route before reaching the intermediate point on the specific route, the second determination processing unit 84 determines that the vehicle 1 is not traveling along the specific route.

If it is determined by the second determination processing unit 84 that the vehicle 1 is not traveling along the specific route, the second notification processing unit 85 notifies a predetermined first notification destination outside the vehicle 1 that it has been determined that the vehicle 1 is not traveling along the specific route.

For example, the first notification destination is an insurance company that has an automobile insurance contract with the user of the vehicle 1. If the vehicle 1 is a rental vehicle such as a rental car, the first notification destination may be a rental business operator that conducts rental business for the vehicle 1.

For example, the server 3 is connected in advance to an information processing device corresponding to the first notification destination, such as a personal computer, so as to be able to communicate therewith. Then, the second notification processing unit 85 displays a message indicating that it has been determined by the second determination processing unit 84 that the vehicle 1 is not traveling along the specific route, and information about the user of the vehicle 1 on a display unit of the information processing device corresponding to the first notification destination. Accordingly, if the first notification destination is the insurance company, it is possible to consider increasing the insurance premium, etc. If the first notification destination is the rental business operator, it is possible to consider increasing the rental fee for the vehicle 1, etc.

The server 3 may acquire in advance an email address of the information processing device corresponding to the first notification destination. In this case, the second notification processing unit 85 may send an email containing a message indicating that it has been determined by the second determination processing unit 84 that the vehicle 1 is not traveling along the specific route, and the information about the user of the vehicle 1 to the email address of the information processing device corresponding to the first notification destination.

If it is determined by the second determination processing unit 84 that the vehicle 1 is traveling along the specific route, the third notification processing unit 86 notifies a second notification destination corresponding to the specific business place that the vehicle 1 on which the tires 2 in the deflation state are mounted is traveling toward the specific business place.

For example, the second notification destination is the specific business place. The second notification destination may be a manager who manages a plurality of such business places, or the like.

For example, the server 3 is connected in advance to the information processing device corresponding to the second notification destination, so as to be able to communicate therewith. Then, the third notification processing unit 86 displays a message indicating that it has been determined by the second determination processing unit 84 that the vehicle 1 is traveling along the specific route, and information for identifying the vehicle 1 (the vehicle type, the color of the vehicle body, the vehicle registration number, etc.) on the display unit of the information processing device corresponding to the second notification destination. Accordingly, at the specific business place, it is possible to make preparations to respond to the visit of the vehicle 1. Specifically, at the specific business place, it is possible to make preparations to adjust the air pressure of the tire 2 of the vehicle 1 or replace the tire 2.

The server 3 may acquire in advance the email address of the information processing device corresponding to the second notification destination. In this case, the third notification processing unit 86 may send an email containing a message indicating that it has been determined by the second determination processing unit 84 that the vehicle 1 is traveling along the specific route, and the information for identifying the vehicle 1 to the email address of the information processing device corresponding to the second notification destination.

Hereinafter, a determination method of the present disclosure will be described together with an example of a procedure for each process executed by the control unit 11.

[Related Value Acquisition Process]

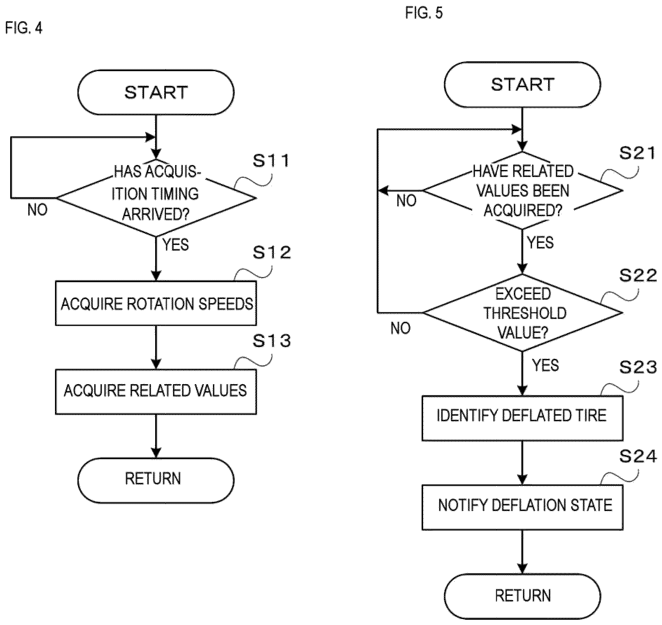

First, an example of the procedure for a related value acquisition process executed by the control unit 11 will be described with reference to FIG. 4. Here, steps S11, S12 ... represent numbers of the processing procedure (steps) executed by the control unit 11. The related value acquisition process is executed while the vehicle 1 is traveling.

<Step S11>

First, in step S11, the control unit 11 determines whether or not the acquisition timing has arrived.
Here, if the control unit 11 determines that the acquisition timing has arrived (Yes side in S11), the control unit 11 shifts the process to step S12. If the acquisition timing has not arrived (No side in S11), the control unit 11 waits for the arrival of the acquisition timing in step S11.

<Step S12>

In step S12, the control unit 11 acquires the rotation speed of each of the tires 2.
Specifically, the control unit 11 acquires the rotation speed of each of the tires 2 using each of the wheel speed sensors 13.

<Step S13>

In step S13, the control unit 11 acquires the four related values. The processes in step S11 to step S13 are an example of an acquisition step of the present disclosure, and are executed by the first acquisition processing unit 71 of the control unit 11.
Specifically, the control unit 11 acquires DEL1, based on the rotation speed of each of the tires 2 acquired by the process in step S12. The control unit 11 also acquires DEL3, based on the rotation speed of each of the tires 2 acquired by the process in step S12. In addition, the control unit 11 acquires the resonance frequency of the tire 2A, based on the rotation speed of the tire 2A acquired by the process in step S12. Moreover, the control unit 11 acquires the resonance frequency of the tire 2B, based on the rotation speed of the tire 2B acquired by the process in step S12.

[Deflation State Detection Process]

Next, an example of the procedure for a deflation state detection process executed by the control unit 11 will be described with reference to FIG. 5. The deflation state detection process is executed while the vehicle 1 is traveling.

<Step S21>

First, in step S21, the control unit 11 determines whether or not the four related values have been acquired. That is, the control unit 11 determines whether or not the process in step S13 of the related value acquisition process has been executed.
Here, if the control unit 11 determines that the four related value have been acquired (Yes side in S21), the control unit 11 shifts the process to step S22. If the four related values have not been acquired (No side in S21), the control unit 11 waits for the acquisition of the four related values in step S21.

<Step S22>

In step S22, for any of the four related values acquired by the process in step S21, the control unit 11 determines whether or not the difference between the related value and the reference value exceeds the threshold value. The process in step S22 is an example of a detection step of the present disclosure, and is executed by the detection processing unit 72 of the control unit 11.
Here, if, for any of the four related values, the control unit 11 determines that the difference between the related value and the reference value exceeds the threshold value (Yes side in S22), the control unit 11 shifts the process to step S23. If, for all of the four related values, the differences between the related values and the reference values do not exceed the threshold value (No side in S22), the control unit 11 shifts the process to step S21.

<Step S23>

In step S23, the control unit 11 identifies the deflated tire 2.
Specifically, if the difference between the resonance frequency of the tire 2A and the reference value corresponding to this resonance frequency exceeds the threshold value, the control unit 11 determines that the tire 2A has been deflated.
If the difference between the resonance frequency of the tire 2B and the reference value corresponding to this resonance frequency exceeds the threshold value, the control unit 11 determines that the tire 2B has been deflated.
If the difference between the related value of either DEL1 or DEL3 and the reference value corresponding to this related value exceeds the threshold value, the control unit 11 identifies the deflated tire 2, based on the combination of the sign of DEL1 and the sign of DEL3.

<Step S24>

In step S24, the control unit 11 notifies the user of the vehicle 1 that the deflation state of the tires 2 has been detected.

For example, the control unit 11 displays a message indicating that the deflation state of the tires 2 has been detected and also indicating the deflated tire 2, on the operation display unit 12. In addition, the control unit 11 periodically generates the warning sound.

[Update Process]

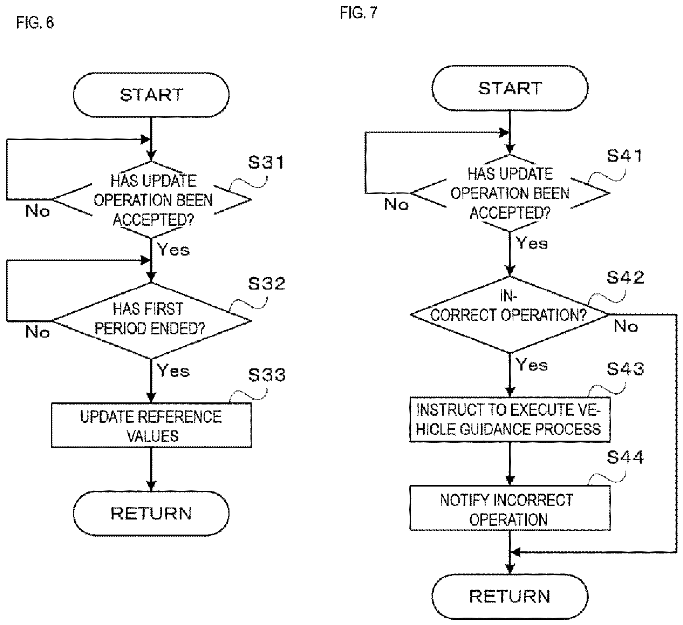

Next, an example of the procedure for an update process executed by the control unit 11 will be described with reference to FIG. 6.

<Step S31>

First, in step S31, the control unit 11 determines whether or not the update operation has been accepted.

Here, if the control unit 11 determines that the update operation has been accepted (Yes side in S31), the control unit 11 shifts the process to step S32. If the update operation has not been accepted (No side in S31), the control unit 11 waits for the acceptance of the update operation in step S31.

<Step S32>

First, in step S32, the control unit 11 determines whether or not the first period has ended.

Specifically, if the number of times the acquisition timing has arrived from the time of acceptance of the update operation has reached a predetermined number, the control unit 11 determines that the first period has ended.

Here, if the control unit 11 determines that the first period has ended (Yes side in S32), the control unit 11 shifts the process to step S33. If the first period has not ended (No side in S32), the control unit 11 waits for the end of the first period in step S32.

<Step S33>

In step S33, the control unit 11 updates the reference values, based on the related values acquired during the first period. The process in step S33 is an example of an update step of the present disclosure, and is executed by the update processing unit 73 of the control unit 11.

Specifically, the control unit 11 sets any of DEL1 s acquired during the first period, as a new reference value corresponding to DEL1.

The control unit 11 sets any of DEL3s acquired during the first period, as a new reference value corresponding to DEL3.

The control unit 11 sets any of resonance frequencies of the tire 2A acquired during the first period, as a new reference value corresponding to the resonance frequency of the tire 2A.

The control unit 11 sets any of resonance frequencies of the tire 2B acquired during the first period, as a new reference value corresponding to the resonance frequency of the tire 2B.

[Operation Determination Process]

Next, an example of the procedure for an operation determination process executed by the control unit 11 will be described with reference to FIG. 7.

<Step S41>

First, in step S41, the control unit 11 determines whether or not the update operation has been accepted.

Here, if the control unit 11 determines that the update operation has been accepted (Yes side in S41), the control unit 11 shifts the process to step S42. If the update operation has not been accepted (No side in S41), the control unit 11 waits for the acceptance of the update operation in step S41.

<Step S42>

In step S42, based on the stop status and the stop location of the vehicle 1 during the second period from the time when the deflation state of the tires 2 was last detected by the deflation state detection process to the time when the last update operation was accepted, the control unit 11 determines whether or not the update operation is an incorrect operation. The process in step S42 is an example of a determination step of the present disclosure, and is executed by the first determination processing unit 74 of the control unit 11.

Specifically, if the vehicle 1 has not stopped during the second period, the control unit 11 determines that the update operation is an incorrect operation.

If the vehicle 1 has stopped during the second period and the stopped time of the vehicle 1 does not exceed the specific time, the control unit 11 determines that the update operation is an incorrect operation.

If the vehicle 1 has stopped during the second period, the stopped time of the vehicle 1 exceeds the specific time, and the stop location of the vehicle 1 is not at the business place, the control unit 11 determines that the update operation is an incorrect operation.

If the vehicle 1 has stopped during the second period, the stopped time of the vehicle 1 exceeds the specific time, and the stop location of the vehicle 1 is at the business place, the control unit 11 determines that the update operation is not an incorrect operation, that is, the update operation is a correct operation.

Here, if the control unit 11 determines that the update operation is an incorrect operation (Yes side in S42), the control unit 11 shifts the process to step S43. If the update operation is not an incorrect operation (No side in S42), the control unit 11 shifts the process to step S41.

<Step S43>

In step S43, the control unit 11 instructs the server 3 to execute a vehicle guidance process described later.

<Step S44>

In step S44, the control unit 11 notifies the user of the vehicle 1 that the update operation has been determined to be an incorrect operation.

For example, the control unit 11 displays a message indicating that the update operation has been determined to be an incorrect operation, on the operation display unit 12. In addition, the control unit 11 periodically generates the warning sound. Moreover, the control unit 11 notifies the user of the vehicle 1 that the update operation has been determined to be an incorrect operation, at the timing when a process in step S54 of the vehicle guidance process described later is executed.

[Vehicle Guidance Process]

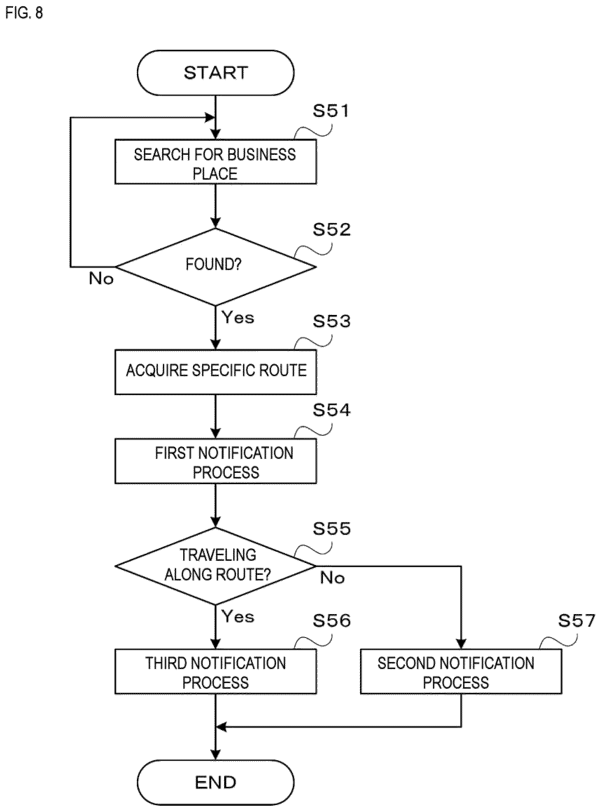

Next, an example of the procedure for the vehicle guidance process executed by the control unit 51 of the server 3 will be described with reference to FIG. 8. The vehicle guidance process is executed when an instruction to execute the vehicle guidance process is received from the control unit 11 of the vehicle 1.

<Step S51>

First, in step S51, the control unit 51 searches for the business place that exists within the specific range from the current position of the vehicle 1. The process in step S51 is executed by the search processing unit 81 of the control unit 51.

Specifically, the control unit 51 communicates with the vehicle 1, and acquires the vehicle position information last acquired by the vehicle 1, from the vehicle 1. In addition, based on the vehicle position information acquired from the vehicle 1 and the map data stored in the storage unit 54, the control unit 51 searches for the business place that exists within the specific range from the position of the vehicle 1 that is based on the acquired vehicle position information.

<Step S52>

In step S52, the control unit 51 determines whether or not the business place has been found by the process in step S51.

Here, if the control unit 51 determines that the business place has been found (Yes side in S52), the control unit 51 shifts the process to step S53. If the business place has not been found (No side in S52), the control unit 51 waits for the arrival of the next search timing and shifts the process to step S51.

<Step S53>

In step S53, the control unit 51 acquires the specific route to the specific business place closest to the current position of the vehicle 1 among the business places found by the process in step S51. The process in step S53 is executed by the second acquisition processing unit 82 of the control unit 51.

Specifically, the control unit 51 acquires the specific route, based on the map data stored in the storage unit 54.

<Step S54>

In step S54, the control unit 51 executes a first notification process of notifying the person in the vehicle 1 of the specific route acquired by the process in step S53. The process in step S54 is executed by the first notification processing unit 83 of the control unit 51.

For example, the control unit 51 displays the guidance screen including the specific route acquired by the process in step S53, on the operation display unit 12 of the vehicle 1.

<Step S55>

In step S55, the control unit 51 determines whether or not the vehicle 1 is traveling along the specific route notified by the process in step S54. The process in step S55 is executed by the second determination processing unit 84 of the control unit 51.

Specifically, the control unit 51 communicates with the vehicle 1, and acquires the vehicle position information acquired by the vehicle 1 after the specific route is notified, from the vehicle 1. Then, the control unit 51 determines whether or not the vehicle 1 is traveling along the specific route, based on the vehicle position information acquired from the vehicle 1.

Here, if the control unit 51 determines that the vehicle 1 is traveling along the specific route (Yes side in S55), the control unit 51 shifts the process to step S56. If the vehicle 1 is not traveling along the specific route (No side in S55), the control unit 51 shifts the process to step S57.

<Step S56>

In step S56, the control unit 51 executes a third notification process of notifying the second notification destination corresponding to the specific business place that the vehicle 1 on which the tires 2 in the deflation state are mounted is traveling toward the specific business place. The process in step S56 is executed by the third notification processing unit 86 of the control unit 51.

Specifically, the control unit 51 displays a message indicating that it has been determined by the process in step S55 that the vehicle 1 is traveling along the specific route, and the information for identifying the vehicle 1 on the display unit of the information processing device corresponding to the second notification destination.

<Step S57>

In step S57, the control unit 51 executes a second notification process of notifying the first notification destination outside the vehicle 1 that it has been determined by the process in step S55 that the vehicle 1 is not traveling along the specific route. The process in step S57 is executed by the second notification processing unit 85 of the control unit 51.

Specifically, the control unit 51 displays a message indicating that it has been determined by the process in step S55 that the vehicle 1 is not traveling along the specific route, and the information about the user of the vehicle 1 on the display unit of the information processing device corresponding to the first notification destination.

As described above, in the deflation state detection system 100, whether or not the update operation is an incorrect operation is determined based on the stop status of the vehicle 1 during the second period from the time of detection of the deflation state of the tires 2 to the time of acceptance of the update operation. Accordingly, it is possible to determine that the update operation is an incorrect operation, only if it can be determined that it is impossible for the user of the vehicle 1 to adjust the air pressure of the tire 2 or replace the tire 2 during the second period, such as if the vehicle 1 has not stopped during the second period. Therefore, compared to a configuration in which the update operation is determined to be an incorrect operation if the difference between the two related values acquired before and after the update operation is accepted is included within a predetermined range, it is possible to inhibit the update operation from being determined to be an incorrect operation when the deflation state of the tires 2 is eliminated by replacing the tire 2.

The control unit 11 of the vehicle 1 may include some or all of the search processing unit 81, the second acquisition processing unit 82, the first notification processing unit 83, the second determination processing unit 84, the second notification processing unit 85, and the third notification processing unit 86.

The embodiment of the present disclosure described above includes disclosure items (1) to (10) described below.

A disclosure item (1) is a deflation state detection system including: a first acquisition processing unit configured to acquire a related value that is related to an air pressure of each pneumatic tire mounted on a vehicle, based on a rotation speed of the pneumatic tire, each time a predetermined acquisition timing arrives; a detection processing unit configured to detect a deflation state of the pneumatic tire, based on the related value acquired by the first acquisition processing unit and a predetermined reference value; an update processing unit configured to, if a predetermined update operation is accepted, update the reference value, based on the related value acquired during a first period including a time of acceptance of the update operation; and a first determination processing unit configured to determine whether or not the update operation is an incorrect operation, based on a stop status of the vehicle during a second period from a time of detection of the deflation state to the time of acceptance of the update operation.

With this system, whether or not the update operation is an incorrect operation is determined based on the stop status of the vehicle during the second period from the time of detection of the deflation state to the time of acceptance of the update operation. Accordingly, it is possible to determine that the update operation is an incorrect operation, only if it can be determined that it is impossible for the user of the vehicle to adjust the air pressure of the pneumatic tire or replace the pneumatic tire during the second period, such as if the vehicle has not stopped during the second period. Therefore, compared to a configuration in which the update operation is determined to be an incorrect operation if the difference between the two related values acquired before and after the update operation is accepted is included within a predetermined range, it is possible to inhibit the update operation from being determined to be an incorrect operation when the deflation state is eliminated by replacing the pneumatic tire.

A disclosure item (2) is the deflation state detection system according to the disclosure item (1), wherein the first determination processing unit determines that the update operation is an incorrect operation, if a continuation time of a stopped state of the vehicle during the second period does not exceed a predetermined specific time.

A disclosure item (3) is the deflation state detection system according to the disclosure item (1) or (2), wherein the first determination processing unit determines whether or not the update operation is an incorrect operation, based on the stop status and a stop location of the vehicle during the second period.

With this system, if the vehicle has stopped during the second period, it is possible to determine whether or not the update operation is an incorrect operation, in consideration of the stop location. Therefore, it is possible to increase the accuracy of determining whether or not the update operation is an incorrect operation.

A disclosure item (4) is the deflation state detection system according to any one of the disclosure items (1) to (3), wherein the first determination processing unit determines whether or not the update operation is an incorrect operation, based on the stop status of the vehicle during the second period, the related value acquired during the second period, and the related value acquired after the second period has elapsed.

With this system, it is possible to determine whether or not the update operation is an incorrect operation, in consideration of the two related values acquired before and after the update operation is accepted. Therefore, it is possible to increase the accuracy of determining whether or not the update operation is an incorrect operation.

A disclosure item (5) is the deflation state detection system according to any one of the disclosure items (1) to (4), further including: a search processing unit configured to search for a business place where it is possible to eliminate the deflation state, if it is determined by the first determination processing unit that the update operation is an incorrect operation; a second acquisition processing unit configured to acquire a specific route to a specific business place closest to a current position of the vehicle among the business places found by the search processing unit; and a first notification processing unit configured to notify a person in the vehicle of the specific route.

With this system, it is possible to guide the vehicle to the nearest business place if the update operation is determined to be an incorrect operation.

A disclosure item (6) is the deflation state detection system according to the disclosure item (5), wherein the search processing unit searches for the business place that exists within a predetermined specific range from the current position of the vehicle, and if the business place is not found, the search processing unit searches for the business place each time a predetermined search timing arrives until the business place is found.

With this system, it is possible to avoid guiding the vehicle to the business place that is far from the planned traveling route of the vehicle.

A disclosure item (7) is the deflation state detection system according to the disclosure item (5) or (6), further including: a second determination processing unit configured to determine whether or not the vehicle is traveling along the specific route, after the specific route is notified by the first notification processing unit; and a second notification processing unit configured to, if it is determined by the second determination processing unit that the vehicle is not traveling along the specific route, notify a predetermined first notification destination outside the vehicle that it has been determined that the vehicle is not traveling along the specific route.

With this system, it is possible to make the first notification destination outside the vehicle recognize that the vehicle is not traveling along the specific route. Therefore, by setting the insurance company or the like as the first notification destination, it is possible to impose a penalty such as an increase in insurance premium at the first notification destination for the vehicle not eliminating the deflation state.

A disclosure item (8) is the deflation state detection system according to any one of the disclosure item (5) to (7), further including: a second determination processing unit configured to determine whether or not the vehicle is traveling along the specific route, after the specific route is notified by the first notification processing unit; and a third notification processing unit configured to, if it is determined by the second determination processing unit that the vehicle is traveling along the specific route, notify a second notification destination corresponding to the specific business place that the vehicle on which the pneumatic tire in the deflation state is mounted is traveling toward the specific business place.

With this system, it is possible to make the second notification destination corresponding to the specific business place recognize that the vehicle is traveling toward the specific business place. Therefore, at the specific business place, it is possible to make preparations to respond to the visit of the vehicle. Specifically, at the specific business place, it is possible to make preparations to adjust the air pressure of the pneumatic tire of the vehicle or replace the pneumatic tire.

A disclosure item (9) is a determination method executed by one or more processors, the determination method including: an acquisition step of acquiring a related value that is related to an air pressure of each pneumatic tire mounted on a vehicle, based on a rotation speed of the pneumatic tire, each time a predetermined acquisition timing arrives; a detection step of detecting a deflation state of the pneumatic tire, based on the related value acquired by the acquisition step and a predetermined reference value; an update step of, if a predetermined update operation is accepted, updating the reference value, based on the related value acquired during a first period including a time of acceptance of the update operation; and a determination step of determining whether or not the update operation is an incorrect operation, based on a stop status of the vehicle during a second period from a time of detection of the deflation state to the time of acceptance of the update operation.

With this method, as in the system of the disclosure item (1), it is possible to inhibit the update operation from being determined to be an incorrect operation when the deflation state is eliminated by replacing the pneumatic tire.

A disclosure item (10) is a program for causing one or more processors to execute: an acquisition step of acquiring a related value that is related to an air pressure of each pneumatic tire mounted on a vehicle, based on a rotation speed of the pneumatic tire, each time a predetermined acquisition timing arrives; a detection step of detecting a deflation state of the pneumatic tire, based on the related value acquired by the acquisition step and a predetermined reference value; an update step of, if a predetermined update operation is accepted, updating the reference value, based on the related value acquired during a first period including a time of acceptance of the update operation; and a determination step of determining whether or not the update operation is an incorrect operation, based on a stop status of the vehicle during a second period from a time of detection of the deflation state to the time of acceptance of the update operation.

With this program, as in the system of the disclosure item (1), it is possible to inhibit the update operation from being determined to be an incorrect operation when the deflation state is eliminated by replacing the pneumatic tire.

The present disclosure may be directed to a computer-readable storage medium having the program of the disclosure item (10) stored non-temporarily therein.

## Claims

1. A deflation state detection system (100) comprising:

   a first acquisition processing unit (71) configured to acquire a related value that is related to an air pressure of each pneumatic tire (2, 2A, 2B, 2C, 2D) mounted on a vehicle (1), based on a rotation speed (V1, V2, V3, V4) of the pneumatic tire (2, 2A, 2B, 2C, 2D), each time a predetermined acquisition timing arrives;
   a detection processing unit (72) configured to detect a deflation state of the pneumatic tire (2, 2A, 2B, 2C, 2D), based on the related value acquired by the first acquisition processing unit (71) and a predetermined reference value;
   an update processing unit (73) configured to, if a predetermined update operation is accepted, update the reference value, based on the related value acquired during a first period including a time of acceptance of the update operation; and
   a first determination processing unit (74) configured to determine whether or not the update operation is an incorrect operation, based on a stop status of the vehicle (1) during a second period from a time of detection of the deflation state to the time of acceptance of the update operation.

2. The deflation state detection system (100) according to claim 1, wherein the first determination processing unit (74) determines that the update operation is an incorrect operation, if a continuation time of a stopped state of the vehicle (1) during the second period does not exceed a predetermined specific time.

3. The deflation state detection system (100) according to claim 1 or 2, wherein the first determination processing unit (74) determines whether or not the update operation is an incorrect operation, based on the stop status and a stop location of the vehicle (1) during the second period.

4. The deflation state detection system (100) according to any one of claims 1 to 3, wherein the first determination processing unit (74) determines whether or not the update operation is an incorrect operation, based on the stop status of the vehicle (1) during the second period, the related value acquired during the second period, and the related value acquired after the second period has elapsed.

5. The deflation state detection system (100) according to any one of claims 1 to 4, further comprising:

   a search processing unit (81) configured to search for a business place where it is possible to eliminate the deflation state, if it is determined by the first determination processing unit (74) that the update operation is an incorrect operation;
   a second acquisition processing unit (82) configured to acquire a specific route to a specific business place closest to a current position of the vehicle (1) among the business places found by the search processing unit (81); and
   a first notification processing unit (83) configured to notify a person in the vehicle (1) of the specific route.

6. The deflation state detection system (100) according to claim 5, wherein

   the search processing unit (81) searches for the business place that exists within a predetermined specific range from the current position of the vehicle (1), and
   if the business place is not found, the search processing unit (81) searches for the business place each time a predetermined search timing arrives until the business place is found.

7. The deflation state detection system (100) according to claim 5 or 6, further comprising:

   a second determination processing unit (84) configured to determine whether or not the vehicle (1) is traveling along the specific route, after the specific route is notified by the first notification processing unit (83); and
   a second notification processing unit (85) configured to, if it is determined by the second determination processing unit (84) that the vehicle (1) is not traveling along the specific route, notify a predetermined first notification destination outside the vehicle (1) that it has been determined that the vehicle (1) is not traveling along the specific route.

8. The deflation state detection system (100) according to any one of claims 5 to 7, further comprising:

   a second determination processing unit (84) configured to determine whether or not the vehicle (1) is traveling along the specific route, after the specific route is notified by the first notification processing unit (83); and
   a third notification processing unit (86) configured to, if it is determined by the second determination processing unit (84) that the vehicle (1) is traveling along the specific route, notify a second notification destination corresponding to the specific business place that the vehicle (1) on which the pneumatic tire (2, 2A, 2B, 2C, 2D) in the deflation state is mounted is traveling toward the specific business place.

9. A determination method executed by one or more processors, the determination method comprising:

   an acquisition step of acquiring a related value that is related to an air pressure of each pneumatic tire (2, 2A, 2B, 2C, 2D) mounted on a vehicle (1), based on a rotation speed (V1, V2, V3, V4) of the pneumatic tire (2, 2A, 2B, 2C, 2D), each time a predetermined acquisition timing arrives;
   a detection step of detecting a deflation state of the pneumatic tire (2, 2A, 2B, 2C, 2D), based on the related value acquired by the acquisition step and a predetermined reference value;
   an update step of, if a predetermined update operation is accepted, updating the reference value, based on the related value acquired during a first period including a time of acceptance of the update operation; and
   a determination step of determining whether or not the update operation is an incorrect operation, based on a stop status of the vehicle (1) during a second period from a time of detection of the deflation state to the time of acceptance of the update operation.

10. A program for causing one or more processors to execute:

   an acquisition step of acquiring a related value that is related to an air pressure of each pneumatic tire (2, 2A, 2B, 2C, 2D) mounted on a vehicle (1), based on a rotation speed (V1, V2, V3, V4) of the pneumatic tire (2, 2A, 2B, 2C, 2D), each time a predetermined acquisition timing arrives;

a detection step of detecting a deflation state of the pneumatic tire (2, 2A, 2B, 2C, 2D), based on the related value acquired by the acquisition step and a predetermined reference value;

an update step of, if a predetermined update operation is accepted, updating the reference value, based on the related value acquired during a first period including a time of acceptance of the update operation; and

a determination step of determining whether or not the update operation is an incorrect operation, based on a stop status of the vehicle (1) during a second period from a time of detection of the deflation state to the time of acceptance of the update operation.

FIG. 1

FIG. 2

1

VEHICLE

11 — CONTROL UNIT

21 — CPU

22 — ROM

23 — RAM

71 — FIRST ACQUISITION PROCESSING UNIT

72 — DETECTION PROCESSING UNIT

73 — UPDATE PROCESSING UNIT

74 — FIRST DETERMINATION PROCESSING UNIT

OPERATION DISPLAY UNIT — 12

INITIALIZATION BUTTON — 31

WHEEL SPEED SENSOR — 13

COMMUNICATION UNIT — 14

GPS RECEIVER — 15

STORAGE UNIT — 16

SPECIFIC STORAGE AREA — 41

FIG. 3

3

SERVER

51 — CONTROL UNIT

61 — CPU

62 — ROM

63 — RAM

81 — SEARCH PROCESSING UNIT

82 — SECOND ACQUISITION PROCESSING UNIT

83 — FIRST NOTIFICATION PROCESSING UNIT

84 — SECOND DETERMINATION PROCESSING UNIT

85 — SECOND NOTIFICATION PROCESSING UNIT

86 — THIRD NOTIFICATION PROCESSING UNIT

OPERATION DISPLAY UNIT — 52

COMMUNICATION UNIT — 53

STORAGE UNIT — 54

FIG. 4

FIG. 5

FIG. 6

```
        ┌─────────────┐
        │    START    │
        └──────┬──────┘
               │
   ┌───────────▼───────────┐
   │    ╱ HAS UPDATE ╲       S31
   └──◄  OPERATION BEEN ►
  No    ╲  ACCEPTED? ╱
         ╲         ╱
           │ Yes
   ┌───────▼───────┐
   │   ╱ HAS FIRST ╲   S32
   └──◄ PERIOD ENDED? ►
  No   ╲         ╱
        │ Yes        S33
  ┌─────▼─────────┐
  │ UPDATE REFERENCE │
  │     VALUES      │
  └───────┬─────────┘
   ┌──────▼──────┐
   │   RETURN    │
   └─────────────┘
```

FIG. 7

```
        ┌─────────────┐
        │    START    │
        └──────┬──────┘
               │
   ┌───────────▼───────────┐
   │    ╱ HAS UPDATE ╲       S41
   └──◄  OPERATION BEEN ►
  No    ╲  ACCEPTED? ╱
           │ Yes
          ╱   IN-    ╲        S42
    ┌────◄ CORRECT OPERATION? ►────┐
    │     ╲         ╱          No   │
    │ Yes                          │
    │         S43                  │
  ┌─▼──────────────────┐           │
  │ INSTRUCT TO EXECUTE VE- │       │
  │ HICLE GUIDANCE PROCESS  │       │
  └─────────┬──────────┘           │
            │       S44            │
  ┌─────────▼────────┐             │
  │ NOTIFY INCORRECT  │            │
  │    OPERATION      │            │
  └─────────┬─────────┘            │
            │◄───────────────────────┘
   ┌────────▼──────┐
   │    RETURN     │
   └───────────────┘
```

FIG. 8

Flowchart:

START
↓
S51 SEARCH FOR BUSINESS PLACE
↓
S52 FOUND?
- No → back to before S51
- Yes ↓
S53 ACQUIRE SPECIFIC ROUTE
↓
S54 FIRST NOTIFICATION PROCESS
↓
S55 TRAVELING ALONG ROUTE?
- No → S57 SECOND NOTIFICATION PROCESS
- Yes ↓
S56 THIRD NOTIFICATION PROCESS
↓
END

Europäisches
Patentamt

European
Patent Office

Office européen
des brevets

# EUROPEAN SEARCH REPORT

**Application Number**

EP 25 17 5310

## DOCUMENTS CONSIDERED TO BE RELEVANT

| Category | Citation of document with indication, where appropriate, of relevant passages | Relevant to claim |
|---|---|---|
| X | US 6 459 369 B1 (WANG ORSON SZU-HAN [US]) 1 October 2002 (2002-10-01) | 1,2,4,9, 10 |
| Y | * column 2 - column 10; figures 1-6 * | 5-8 |
| A | | 3 |
| | ----- | |
| Y | US 6 404 330 B1 (SUMITOMO RUBBER IND [JP]; SUMITOMO ELECTRIC INDUSTRIES [JP]) 11 June 2002 (2002-06-11) * columns 3-7; figures 1-5 * | 5-8 |
| | ----- | |
| X | CN 111 267 556 B (HYUNDAI MOTOR CO LTD; KIA MOTORS CORP) 24 March 2023 (2023-03-24) * the whole document * | 1,9,10 |
| | ----- | |

**CLASSIFICATION OF THE APPLICATION (IPC)**

INV.
B60C23/06

**TECHNICAL FIELDS SEARCHED (IPC)**

B60C

The present search report has been drawn up for all claims

| Place of search | Date of completion of the search | Examiner |
|---|---|---|
| Munich | 6 October 2025 | Billen, Karl |

EPO FORM 1503 03.82 (P04C01)

## ANNEX TO THE EUROPEAN SEARCH REPORT
## ON EUROPEAN PATENT APPLICATION NO.

EP 25 17 5310

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | | Publication date | Patent family member(s) | | Publication date |
|---|---|---|---|---|---|
| US 6459369 | B1 | 01-10-2002 | NONE | | |
| US 6404330 | B1 | 11-06-2002 | DE | 60107331 T2 | 02-03-2006 |
| | | | EP | 1184208 A1 | 06-03-2002 |
| | | | JP | 3538133 B2 | 14-06-2004 |
| | | | JP | 2002081945 A | 22-03-2002 |
| | | | US | 2002044051 A1 | 18-04-2002 |
| CN 111267556 | B | 24-03-2023 | CN | 111267556 A | 12-06-2020 |
| | | | DE | 102019119338 A1 | 04-06-2020 |
| | | | KR | 20200067650 A | 12-06-2020 |
| | | | US | 2020171892 A1 | 04-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013249024 A